# FASCICULE DE BREVET EUROPEEN

(11) **EP 0 476 208 B1**
(45) Date de publication et mention de la délivrance du brevet: **18.01.1995**
(21) Numéro de dépôt: 90401707.6
(22) Date de dépôt: 19.06.1990
(51) Int. Cl.: B60T 7/08

(54) **Levier de commande rabattable pour frein à main de véhicule**
Klappbarer Betätigungshebel für eine Fahrzeug-Handbremse
Foldable actuating lever for a vehicle hand brake

(43) Date de publication de la demande: 25.03.1992
(73) Titulaire: ETABLISSEMENTS LANGLOIS et PETER Société Anonyme, 93000 Bobigny (FR)
(72) Inventeur: Marie, Bruno, F-93300 Aubervilliers (FR)
(74) Mandataire: Gayraud, René

(56) Documents cités:
- EP-A- 0 212 664
- EP-A- 0 365 396
- FR-A- 1 598 549

## Description

La présente invention a pour objet un levier de commande pour frein à main rabattable en position de serrage afin de présenter un encombrement minimum au-dessus du plancher du véhicule.

En effet, dans certains véhicules de sport dont le châssis et la caisse sont surbaissés, le frein à main est disposé à gauche du siège du conducteur. Cette disposition présente l'inconvénient d'entraver la descente du conducteur, le levier de commande dépassant largement au-dessus de la hauteur du siège lorsque le frein à main est serré. De même lorsque le frein à main est disposé, de manière classique, entre les sièges avant d'un véhicule, son encombrement est important et rend difficile le passage d'un siège à l'autre, les utilisateurs préférant d'ailleurs descendre du véhicule et faire le tour de celui-ci pour changer de siège.

On a tenté de remédier à ces inconvénients par la réalisation d'un levier de frein à main rabattable constitué en deux parties articulées autour d'un axe pouvant, dans un premier temps, assurer la fonction de serrage du frein et dans un second temps être rabattu vers le plancher de manière, en s'effaçant, à présenter un encombrement minimum au-dessus du plancher du véhicule sans bien entendu, entraîner le desserrage du frein, comme décrit dans le brevet français n° 1598549.

Toutefois, dans les réalisations connues, on ne peut agir sur le frein lorsque le levier est rabattu, ce qui peut entraîner des inconvénients en cas d'urgence.

L'invention a pour objet de remédier à ces inconvénients par la réalisation d'un levier de frein à main rabattable constitué en deux parties articulées autour d'un axe pouvant, dans un premier temps, assurer la fonction de serrage du frein et dans un second temps être rabattu vers le plancher de manière, en s'effaçant, à présenter un encombrement minimum au-dessus du plancher du véhicule sans bien entendu, entraîner le desserrage du frein.

Le levier de frein selon l'invention étant remarquable, notamment, en ce qu'il est réalisé de manière à séparer la fonction serrage (sécurité) de la fonction d'effacement (rabattement du levier).

L'invention sera mieux comprise à la lecture de la description qui suit d'une de ses réalisations préférées et à l'examen des dessins annexés sur lesquels:
- La figure 1 est une vue en élévation et en coupe du levier de commande de frein à main selon l'invention en position déserrée.
- La figure 2 est une vue de dessus en coupe du levier de commande de la figure 1 suivant la ligne II-II.
- La figure 3 est une vue du levier de commande de la figure 1 en position serrée.
- La figure 4 est une vue du levier de commande en position serrée et rabattue.

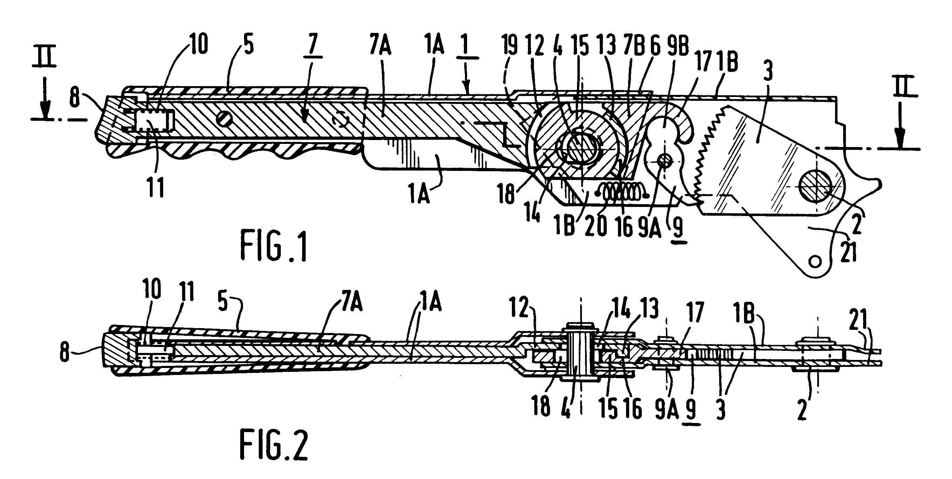

En se reportant aux figures 1 et 2 on voit que le levier de commande pour frein à main selon l'invention est composé d'un fourreau 1 formé par une tôle pliée en "U", monté pivotant autour d'un axe 2 portant un secteur denté fixe 3. Le fourreau 1 en tôle pliée est réalisé en deux parties 1A et 1B pouvant pivoter autour d'un axe 4, situé sensiblement au tiers de la longueur du levier de commande, ledit axe 4 étant porté par les ailes du fourreau 1. La partie 1A du fourreau comporte à l'une de ses extrémités une poignée en matière synthétique surmoulée 5, son autre extrémité est conformée de manière à recouvrir l'extrémité supérieure de la partie 1B du fourreau tout en formant une butée 6 permettant d'assurer un point d'appui lorsque l'on tire le levier vers le haut en position serrée.

La partie 1B du fourreau est conformée à sa partie inférieure de manière à former des joues triangulaires 21 recouvrant le secteur denté fixe 3 et à recevoir les orgànes de liaison au frein proprement dit de types connus qui n'ont pas été représentés.

L'extrémité supérieure de la partie 1B du fourreau s'insère à l'intérieur de la partie inférieure de 1A. Cette extrémité comporte une partie tronquée 19 destinée à prendre appui sur la butée 6 de 1A lorsque l'on rabat le levier. Un ressort de liaison 20 est prévu entre les fourreaux 1A et 1B pour les maintenir sous tension.

A l'intérieur du fourreau 1 est disposée une tige de commande 7 sur laquelle agit à l'une de ses extrémités un bouton poussoir 8 disposé dans la poignée 5 et dont l'autre extrémité est accrochée à un cliquet 9 monté sur un axe 9A porté par les ailes du fourreau 1B et coopérant avec le secteur denté 3.

La tige de commande 7 est réalisée en fer plat et comporte deux partie 7A et 7B montées pivotantes autour de l'axe 4 au moyen d'une articulation qui sera décrite plus loin. Une des extrémités de la partie 7A de la tige de commande porte le bouton poussoir 8 maintenu en partie, hors de la poignée 5, au moyen d'un ressort 10 et dont un axe 11 peut agir sur l'extrémité de la tige 7A. L'autre extrémité de ladite tige 7A se termine par un flasque circulaire 12 portant une couronne circulaire 13 s'étendant à peu prés sur 45° d'angle. Le flasque 12 est pourvu d'un orifice central 14 pour le passage de l'axe 4 sensiblement plus grand que le diamètre dudit axe 4 pour permettre son débattement lors de l'éffacement du levier de commande.

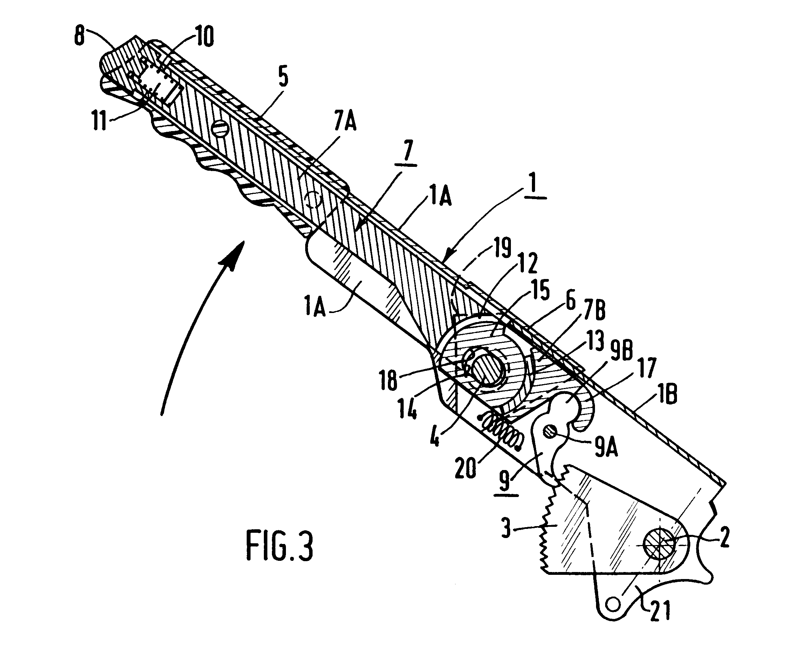

La partie 7B comporte à une de ses extrémités également un flasque circulaire 15 muni d'une rainure circulaire 16 destinée à recevoir la couronne 13 de la tringle 7A. L'autre extrémité comporte un crochet 17 venant coiffer la tête 9B du cliquet 9 monté sur l'axe 9A. Le flasque 15 comporte également un orifice central oblong 18 destiné au passage de l'axe 4, et à permettre le déplacement longitudinal de la tige 7B pour dégager le cliquet 9 du secteur denté 3, sous l'action de la tige 7A lorsque l'on appuie sur le bouton poussoir 8. Lorsque la couronne 13 est engagée dans la rainure 16, l'ensemble formé par les flasques circulaires 12 et 15 constitue l'articulation de la tringle de commande 7, indépendante de l'axe 4 de pivotement du fourreau 1, ce qui permet de dissocier les fonctions de serrage (sécurité) et d'éffacement (rabattement du levier). Pour serrer le frein et amener le levier de commande selon l'invention dans la position serrée representée à la figure 3 on saisit la poignée 5 en appuyant sur le bouton poussoir 8, ce qui provoque le déplacement des tiges 7A et 7B et assure la libération du cliquet 9 ; on tire ensuite le levier vers le haut jusqu'à ce que le frein soit serré et l'on relâche alors le bouton poussoir 8. La translation des tiges 7A et 7B n'est pas entravé par l'axe 4, celui-ci pouvant se déplacer dans l'orifice oblong 18, et dans l'orifice 14.

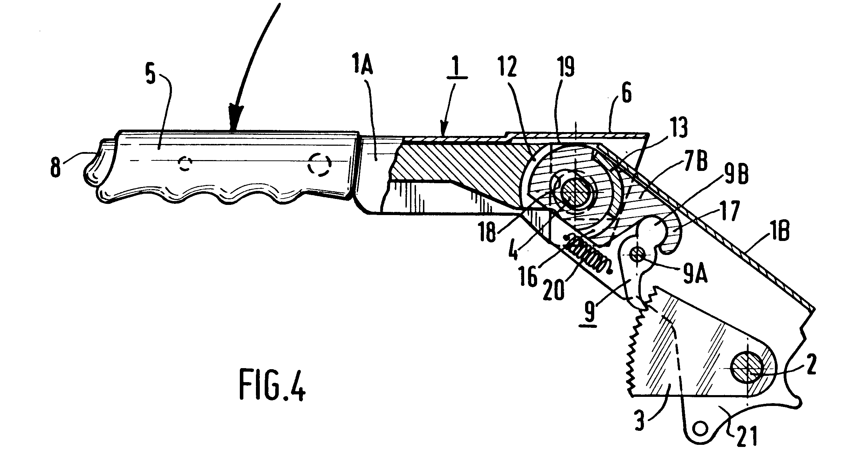

Le frein étant serré, pour rabattre le levier 1, il suffit d'appuyer sur la poignée 5 vers le bas. Le levier 1 se "casse", les parties 1A et 7A pivotant autour de l'axe 4, jusqu'à ce que la partie tronquée 19 du fourreau 1B vienne au contact de la butée 6 de la partie 1A, comme représenté sur la figure 4. Il faut noter que la partie tronquée 19 a été découpée de façon telle que la partie 1A du levier rabattue soit horizontale.

Par ailleurs les tiges de commande 7A et 7B sont toujours en prise puisque, la couronne 13 se déplace par rotation dans la rainure circulaire 16 ; de ce fait on peut si on le désire, desserer le frein en agissant sur le bouton poussoir 8 sans être obligé de relever d'abord le levier de commande 1. Le dispositif selon l'invention sépare la sécurité (serrage du frein) de l'éffacement du levier (rabattement).

Il est bien entendu que la forme d'exécution de la présente invention decrite ci-dessus a été donnée à titre d'exemple purement indicatif et nullement limitatif et que des modifications peuvent y être apportées par l'homme de l'art sans pour autant sortir du cadre de la présente invention. C'est ainsi que l'axe 4 peut être déplacé de même l'effacement du levier peut atteindre un angle sous l'horizontal. L'invention peut également être appliquée à tout levier de commande devant être éffacé après actionnement, pour présenter un encombrement minimum.

## Revendications

1. Levier de commande rabattable pour frein à main de véhicule comportant un fourreau (1) en tôle pliée réalisé en deux parties (1A-1B) pivotant autour d'un axe (2) portant un secteur denté fixe (3) dans lequel est disposée une tige de commande en fer plat (7), également réalisée en deux parties (7A-7B) actionnée par un bouton poussoir (8) solidaire d'un cliquet (9) coopérant avec un secteur denté (3) caractérisé en ce que les deux parties (7A-7B) de la tige de commande comportent une articulation constituée au moyen de deux flasques circulaires (12-15) leur permettant de pivoter autour d'un axe (4) pour rabattre le levier de commande tout en assurant une liaison constante entre la tige de commande (7) et le cliquet (9) afin de dissocier la fonction 〈〈serrage-desserrage〉〉 du frein de la fonction d'effacement du levier de commande.

2. Levier de commande pour frein à main de véhicule selon 1 caractérisé en ce que la première partie (7A) de la tige (7) de commande coopérant avec le bouton poussoir (8) se termine par un flasque circulaire (12) portant une couronne circulaire (13), ledit flasque (12) étant pourvu d'un orifice central (14) pour le libre passage de l'axe d'articulation (4) du fourreau (1), la seconde partie (7B) de la tige (7) de commande comportant à l'une de ses extrémités un flasque circulaire (15), muni d'une rainure (16) destinée à recevoir la couronne (13) du flasque (12) de la première partie (7A) de la tige (7), et comportant dans sa partie centrale un orifice oblong (18), laissant le libre passage de l'axe (4) du fourreau (1) et permettant le coulissement de la tige de commande (7) dans le fourreau (1) sous l'action du bouton poussoir (8).

3. Levier de commande rabattable pour frein à main de véhicule selon 1 caractérisé en ce que les deux parties (1A-1B) constituant le fourreau (1) sont articulés autour d'un axe (4) porté par les ailes d'une des parties (1A) dudit fourreau (1), disposé au tiers environ de la longueur du levier.

4. Levier de commande pour frein à main de véhicule selon 1 caractérisé en ce que l'une des parties (1A) du fourreau (1) a une extrémité conformée de manière à recouvrir l'extrémité supérieure de la seconde partie (1B) du fourreau, en formant une butée d'arrêt (6) pour celle-ci.

5. Levier de commande pour frein à main de véhicule selon 1 caractérisé en ce que l'autre partie (1B) du fourreau (1) est conforme à sa partie inférieure de manière à former des joues triangulaires (21) recouvrant le secteur denté (3) et pouvant recevoir les organes de liaison au frein, sa partie supérieure venant s'insérer sous la butée d'arrêt (6) de la première partie (1A) du fourreau (1) et comportant une partie tronquée (19) pouvant prendre appui sur la butée d'arrêt (6) précitée lorsque le levier est rabattu.

6. Levier de commande rabattable pour frein à main de véhicule selon 1 caractérisé en ce que la tige de commande (7) peut être actionnée lorsque le levier (1) est rabattu afin d'agir sur le cliquet 9 et assurer le desserrage du frein.

## Claims

1. Foldable control lever for a vehicle handbrake comprising a folded sheet metal sheath (1) formed of two portions (1A-1B) pivoting around an axis (2) bearing a fixed toothed sector contaning a flat iron control rod (7), also formed of two portions (7A-7B) and activated by a pushbutton (8) integral with a ratchet wheel (9) cooperating with a toothed sector (3), wherein the two portions (7A-7B) of the control rod comprise a joint established with the aid of two circular flanges (12-15) enabling them to pivot around a hinge pin (4) so as to fold down the control lever whilst ensuring a constant link between the control rod (7) and the ratchet wheel (9) so as to dissociate the brake "tightening/loosening" function from the cancellation function of the control lever.

2. Control lever for a vehicle handbrake according to claim 1, wherein the first portion (7A) of the control rod (7) cooperating with the pushbutton (8) is ended by a circular flange (12) bearing a circular crown (13), said flange (12) being provided with a central orifice (14) for the free passage of the hinge pin (4) of the sheath (1), the second portion (7B) of the control rod (7) comprising at one of its ends a circular flange (15) fitted with a groove (16) for receiving the crown (13) of she flange (12) of the first portion (7A) of the rod (7), and comprising in its central portion an oblong orifice (18) allowing for the free passage of the hinge pin (4) of the sheath (1) and the sliding of the control rod (7) in the sheath (1) under the action of the pushbutton (8).

3. Foldable control lever for a vehicle handbrake according to claim 1, wherein the two portions (1A-1B) constituting the sheath (1) are joined around a hinge pin (4) borne by the wings of one of the portions (1A) of said sheath (1) disposed at about one third of the length of the lever.

4. Control lever for a vehicle handbrake according to claim 1, wherein one of the portions (1A) of the sheath (1) has one end shaped in such a way as to cover the upper end of the second portion (1B) of the sheath, thus forming a crash stop (6) for the latter.

5. Control lever for a vehicle handbrake according to claim 1, wherein the other portion (1B) of the sheath (1) is shaped at its lower portion so as to form triangular cheeks (21) covering the toothed sector (3) and able to receive brake linking members, its upper portion being inserted under the crash edge (6) of the first portion (1A) of the sheath (1) and comprising a truncated portion (19) able to take support on said crash stop (6) when the lever is turned down.

6. Foldable control lever for a vehicle handbrake according to claim 1, wherein the control rod (7) may be activated when the lever (1) is turned down so as to act on the ratchet wheel 9 and ensure loosening of the brake.

## Patentansprüche

1. Abklappbarer Handbremshebel für Kraftfahrzeuge, bestehend aus einer aus zwei Teilen (1A, 1B) gebildeten Hülle (1) aus Falzblech, die schwenkbar um eine Achse (2) mit einem feststehenden Zahnradsektor (3) angeordnet ist, wobei in der Hülle eine ebenfalls aus zwei Teilen (7A, 7B) bestehende Betätigungsstange (7) aus Flachstahl angebracht ist, die über eine mit dem Zahnradsektor (3) zusammenwirkende Drucktaste (8) und eine fest daran angebrachte Klinke (9) ausgelöst wird, **dadurch gekennzeichnet, daß** die beiden Teile (7A, 7B) der Betätigungsstange ein Gelenk besitzen, das aus zwei kreisförmigen Flanschen (12, 15) besteht, über die sie um eine Achse (4) geschwenkt werden können, sodaß die Betätigungsstange abgeklappt werden kann, wobei jedoch gleichzeitig eine ständige Verbindung zwischen der Betätigungsstange (7) und der Klinke (9) gewährleistet ist, um die Funktion "Bremse anziehen/lösen" von der Funktion "Handbremshebel abklappen" zu trennen.

2. Handbremshebel nach Patentanspruch 1, dadurch gekennzeichnet, daß das eine Ende der ersten Hälfte (7A) der mit der Drucktaste zusammenwirkenden Betätigungsstange (7) die Form eines kreisförmigen Flansches (12) mit einem kreisförmigen Wulst (13) sowie eine kreisförmige Aussparung (14) für die Achse (4) zum Schwenken der Hülle (1) besitzt, während das eine Ende der anderen Hälfte (7B) der Betätigungsstange (7) die Form eines kreisförmigen Flansches (15) mit einer kreisförmigen Vertiefung (16) zur Aufnahme des kreisförmigen Wulstes (13) des Flansches (12) der ersten Hälfte (7A) der Betätigungsstange (7) sowie in der Mitte eine längliche Öffnung (18) für die Achse (4) der Hülle (1) besitzt, sodaß die Betätigungsstange (7) beim Drücken auf die Drucktaste (8) in der Hülle (1) in Längsrichtung verschoben werden kann.

3. Handbremshebel nach Patentanspruch 1, dadurch gekennzeichnet, daß die beiden die Hülle (1) bildenden Hälften (1A, 1B) schwenkbar um eine Achse (4) angeordnet sind, die in etwa einem Drittel der Länge des Handbremshebels in den Schenkeln der einen Hälfte (1A) der Hülle (1) angebracht ist.

4. Handbremshebel nach Patentanspruch 1, dadurch gekennzeichnet, daß die eine Hälfte (1A) der Hülle (1) am Ende so ausgebildet ist, daß sie das obere Ende der anderen Hälfte (1B) der Hülle (1) überdeckt, wobei sie einen Anschlag (6) für die Hülle bildet.

5. Handbremshebel nach Patentanspruch 1, dadurch gekennzeichnet, daß die andere Hälfte (1B) der Hülle (1) auf der Unterseite so ausgebildet ist, daß sie dreieckige Seitenteile (21) bildet, die des Zahnradsektor (3) überdecken und Teile zur Verbindung mit der Bremse aufnehmen kann, während die Oberseite unter dem Anschlag (6) der ersten Hälfte (1A) der Hülle (1) zu liegen kommt und einen verkürzten Teil (19) aufweist, der bei abgeklapptem Handbremshebel auf dem Anschlag (6) aufliegt.

6. Handbremshebel nach Patentanspruch 1, dadurch gekennzeichnet, daß die Betätigungsstange (7) ausgelöst werden kann, wenn der Handbremshebel (1) abgeklappt ist, um die Klinke (9) zu schwenken und so die Handbremse zu lösen.
